# EUROPEAN PATENT APPLICATION

(11) **EP 1 527 942 A1**
(43) Date of publication of application: **04.05.2005**
(21) Application number: 04025658.8
(22) Date of filing: 28.10.2004
(51) Int. Cl.: B60L 5/20

(54) **Current collector**

(30) Priority: 28.10.2003 JP 2003366848
(71) Applicant: Hitachi, Ltd., Tokyo (JP)
(72) Inventor: Sugimura, Kazuyuki, Chiyoda-ku Tokyo 100-8220 (JP); Morita, Kiyoshi, Chiyoda-ku Tokyo 100-8220 (JP); Chono, Takahiro, Chiyoda-ku Tokyo 100-8220 (JP); Hattori, Morishige, Chiyoda-ku Tokyo 100-8220 (JP); Hashimoto, Katsufumi, Shibuya-ku Tokyo 151-8578 (JP); Kurita, Takeshi, Shibuya-ku Tokyo 151-8578 (JP)
(74) Representative: Beetz & Partner Patentanwälte

(57) **Abstract**

A current collector apparatus installed on the roof of a vehicle includes a collector shoe (1); the collector shoe (1) has one or more front vent holes (6) and one or more rear vent holes (7) provided, respectively, in the front and rear surfaces with respect to the running direction of the vehicle. An arbitrary one of the front vent holes (6) is connected to at least one of the rear vent holes (7) by an air channel (8); the front and rear vent holes (6) and (7) and the air channel (8) cause a jet flow to be ejected behind the collector shoe (1); the jet flow decreases the strength of the Karman vortexes, breaks the structure of the Karman vortexes, and thereby reduces eolian sounds.

## Description

### BACKGROUND OF THE INVENTION

### 1. Field of the Invention

The present invention relates to a current collector apparatus installed on the roof of a vehicle, and more particularly, to a structure for reducing noise of a collector shoe.

### 2. Description of the Related Art

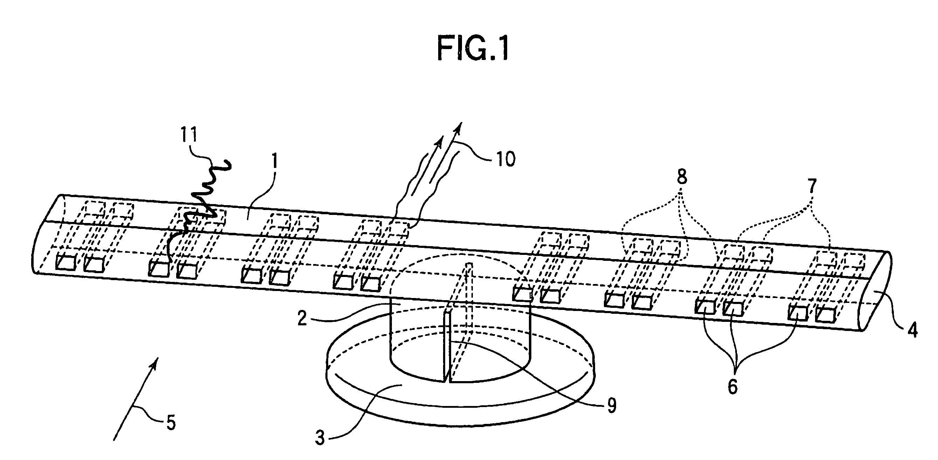

Japanese Unexamined Patent Application Publication No. 8-065807 discloses a horn as a component of a current collector apparatus at pages 2 and 3 of the specification and in Figs. 1 and 11. The horn has vent holes opened in the flow direction in order to reduce eolian sounds resulting from Karman vortexes produced on the downstream side of the horn.

Japanese Unexamined Patent Application Publication No. 6-311605 discloses, at pages 3 and 4 of the specification and in Figs. 1 to 8, a collector shoe that is made of a porous material or has a hollow structure, and that has a plurality of vent holes in the upper and lower surfaces in order to reduce aerodynamic sound.

According to Japanese Unexamined Patent Application Publication No. 8-065807, aerodynamic sound caused by the horn can be reduced, but aerodynamic sound caused by other sections cannot be reduced.

Since a collector shoe is always in contact with a contact wire for power supply, it is desirable to minimize fluctuation in the lift. In order to limit the fluctuation in the lift, some restrictions are placed on the cross-sectional shape of the collector shoe. Therefore, it is difficult to reduce eolian sounds by freely changing the cross-sectional shape of the collector shoe.

Since aerodynamic sound from the sections other than the horn becomes remarkable as the moving speed of the vehicle increases, it is a problem to reduce aerodynamic sound from the collector shoe, than from the horn, in a fast-moving vehicle.

In Japanese Unexamined Patent Application Publication No. 6-311605, a slider is disposed on the collector shoe so as to be in contact with the contact wire. Therefore, when a plurality of vent holes are provided in the upper and lower surfaces of the collector shoe, the size of the collector shoe is thereby increased. Moreover, dust produced by the friction between the contact wire and the slider sometimes clogs the upper and lower vent holes. In addition, since fast flows normally pass on the upper and lower surfaces of the collector shoe, the vent holes provided in the surfaces also produce noise.

In particular, when the collector shoe contains something, the inner structure of the collector shoe cannot be freely determined. This reduces the effect of reducing aerodynamic sound.

### SUMMARY OF THE INVENTION

Accordingly, it is an object of the present invention to provide a current collector apparatus for a vehicle, including a collector shoe that reduces aerodynamic sound from the current collector apparatus, more particularly, eolian sounds resulting from Karman vortexes serving as main sound sources.

In order to achieve the above object, one aspect of the present invention provides a current collector apparatus installed on a roof of a vehicle, and including a collector shoe. The collector shoe includes one or more front vent holes and one or more rear vent holes provided, respectively, in front and rear surfaces with respect to the running direction of the vehicle, and an arbitrary one of the front vent holes is connected to at least one of the rear vent holes by an air channel.

Another aspect of the present invention provides a current collector apparatus installed on a roof of a vehicle, and including a collector shoe. The collector shoe includes a component that is not air-permeable; one or more front vent holes and one or more rear vent holes provided, respectively, in front and rear surfaces with respect to the running direction of the vehicle; and a bypass air channel provided around the component. An arbitrary one of the front vent holes is connected to at least one of the rear vent holes by the bypass air channel.

A further aspect of the present invention provides a current collector apparatus installed on a roof of a vehicle. The current collector apparatus includes a collector shoe having a vent hole provided in a downstream-side surface with respect to the running direction of the vehicle; and an air supply provided outside the collector shoe. The vent hole and the air supply are connected by an air channel.

According to the present invention, a jet flow is ejected on the downstream side of the collector shoe from front and rear vent holes provided in the surfaces of the collector shoe so as to be linked in the direction of a main airflow, or vent holes connected by a bypass channel that bypasses a component contained in the collector shoe. This reduces the velocity shear force that causes Karman vortexes to decrease the strength of the Karman vortexes, and shifts rearward the rolling position of the Karman vortexes.

A two-dimensional structure of the Karman vortexes can be broken by nonuniform jet flows produced by discrete arrangement of the vent holes and the asymmetry of the air channel.

By a combination of the above actions, eolian sounds from the collector shoe can be reduced. Moreover, when the Karman vortexes are weakened, fluctuation in the lift of the collector shoe is reduced, separation from the contact wire is prevented, and current-collecting performance is enhanced.

### BRIEF DESCRIPTION OF THE DRAWINGS

Fig. 1 is an external perspective view of a collector shoe in a current collector apparatus according to a first embodiment of the present invention;
Fig. 2 is a cross-sectional view of the collector shoe shown in Fig. 1, taken perpendicularly to the longitudinal direction, schematically showing a wake flow of the collector shoe having an air channel;
Fig. 3 is a sectional top view of a collector shoe having a component according to a second embodiment of the present invention;
Fig. 4 is a cross-sectional view of a collector shoe according to a third embodiment of the present invention, taken perpendicularly to the longitudinal direction;
Fig. 5 is a sectional plan view showing air channels in the collector shoe shown in Fig. 4: and
Fig. 6 is a cross-sectional view of a current collector apparatus according to a fourth embodiment of the present invention, taken along perpendicularly to the longitudinal direction of a collector shoe.

### DESCRIPTION OF THE PREFERRED EMBODIMENTS

Current collector apparatuses according to embodiments of the present invention will be described below with reference to Figs. 1 to 6.

### <First Embodiment>

Fig. 1 is an external perspective view of a collector shoe of a current collector apparatus according to a first embodiment of the present invention.

A collector shoe 1 is connected to a main unit 3 of a current collector apparatus by a shoe support member 2. While the main unit 3 is an elliptic structure in the first embodiment, the present invention is not limited to this shape. Although not shown, a horn for wire guide is normally mounted in front of an end face 4 of the collector shoe 1.

A main airflow 5 passes to face a moving vehicle. That is, as the vehicle runs from the upper side to the lower side of the plane of the drawing, the main airflow 5 flows from the lower side to the upper side. In principle, the collector shoe 1 is disposed so that the longitudinal direction thereof crosses the main airflow 5.

At least one front vent hole 6 into which the main airflow 5 blows, and at least one rear vent hole 7 on the downstream side of the collector shoe 1 are provided in the surfaces of the collector shoe 1. When the running direction of the vehicle is reversed, the functions of the front vent hole 6 and the rear vent hole 7 are also reversed.

In Fig. 1, the front and rear vent holes 6 and 7 are provided in the same number and at the same positions in the longitudinal direction of the collector shoe 1. However, the front and rear vent holes 6 and 7 may be different in number and position.

Also, the vent holes 6 and 7 may be provided at a plurality of positions in the height direction on the front and rear surfaces of he collector shoe 1.

Air channels 8 are provided inside the collector shoe 1 to arbitrarily link the front vent holes 6 and the rear vent holes 7. The air channels 8 link the front vent holes 6 to the rear vent holes 7 in one-to-one correspondence.

Each of the air channel 8 may link a plurality of front vent holes 6 and a plurality of rear vent holes 7. For example, in order to prevent resonance, the cross-sectional area of the air channel 8 may be changed, or a noise absorber may be provided in the air channel 8.

The shoe support member 2 may also have, as an air channel 9, a structure similar to the air channels 8 of the collector shoe 1.

A description will now be given of how to reduce eolian sounds from the collector shoe 1 in the present invention.

The pressure on the front side of the collector shoe 1 increases because the main airflow 5 collides and stagnates. In contrast, the pressure on the rear side of the collector shoe 1 is low because the rear side is within a separation region of a wake flow. Therefore, a difference in pressure is formed between the vent hole 6 and the vent hole 7, and an air flow passing through the air channel 8 from the front side to the rear side is induced. The air flow comes as a jet flow 10 out of the rear vent hole 7 of the collector shoe 1, and applies a kinetic momentum to the separated flow.

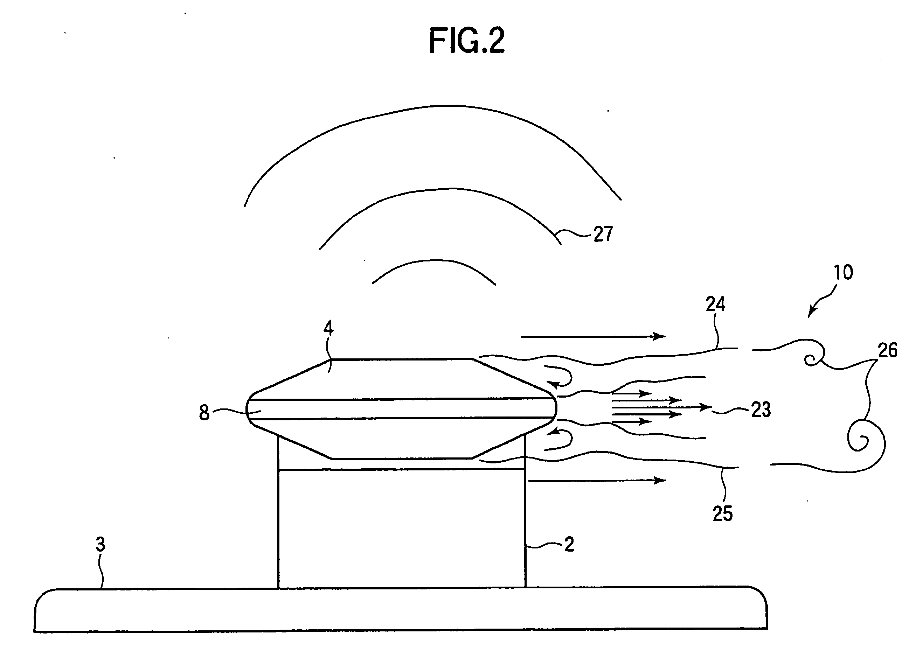

Fig. 2 is a cross-sectional view of the collector shoe 1 having the air channel 8, taken perpendicularly to the longitudinal direction, and schematically shows a wake flow of the collector shoe 1.

Arrows in Fig. 2 indicate normal flows. Velocity shear layers 24 and 25 exist at the boundaries between a main air region and a separation region on the upper and lower sides of a jet flow 23. A loop 27 indicates how an eolian sound emitted upward propagates.

When the jet flow 23 passes, the velocity gradients at the velocity shear layers 24 and 25 are made gentler than when no jet flow passes, because a kinetic momentum is applied to the wake flow by the jet flow 23.

The unstable velocity shear layers 24 and 25 roll up, and finally, are alternately ejected to form Karman vortexes 26. Therefore, the strength of the Karman vortexes 26 can be reduced by decreasing the velocity gradients at the velocity shear layers 24 and 25 by the jet flow 23.

Since much time is taken for the velocity shear layers 24 and 25 to roll up, the positions of the Karman vortexes 26 are displaced rearward.

The Karman vortexes 26 ejected alternately induce a pressure fluctuation on the surface of the collector shoe 1. Since eolian sounds are caused by the pressure fluctuation, they are reduced when the pressure fluctuation is suppressed by ejecting the jet flow 23.

By discretely arranging the vent holes 6 and 7, as shown in Fig. 1, intermittent jet flows can be ejected in the longitudinal direction of the collector shoe 1.

In Fig. 2, when the timing at which the Karman vortexes 26 roll up is shifted in the longitudinal direction, the phase of the eolian sound 27 is also shifted in the longitudinal direction, which reduces the effect of emitting the tones as composite waves.

By a combination of the above-described actions, eolian sounds from the collector shoe 1 of the first embodiment can be reduced.

When pressure fluctuation on the surface of the collector shoe 1 is suppressed, fluctuation of the lift for the collector shoe 1 is reduced. Therefore, the collector shoe 1 rarely loses contact with the contact wire, and high current-collecting performance can be ensured.

The discrete arrangement of the front vent holes 6 in the collector shoe 1 provides the following new advantages. That is, since the front vent holes 6 are discretely arranged in the longitudinal direction of the collector shoe 1, the state of stagnation caused by the collision of the main airflow 5 with the front of the collector shoe 1 changes in the longitudinal direction of the collector shoe 1. Therefore, disturbance is caused and a longitudinal vortex 11 is produced between the front side and the rear side of the collector shoe 1 at the boundaries between the front vent holes 6. The disturbance and the longitudinal vortex 11 causes a turbulent flow, and the combination effect of the longitudinal vortex 11 is produced. This prevents the main airflow 5 from being separated in the collector shoe 1.

The flow that rarely separates can suppress the surface pressure fluctuation, and is effective in reducing noise and reducing the lift fluctuation.

### <Second Embodiment>

Since the height of the contact wire is changed by the moving vehicle, the collector shoe sometimes includes a vibration absorber for absorbing variations in highfrequency current of a slider in contact with the contact wire.

When the collector shoe contains something therein in this way, it is impossible to form the direct air channels shown in Fig. 1.

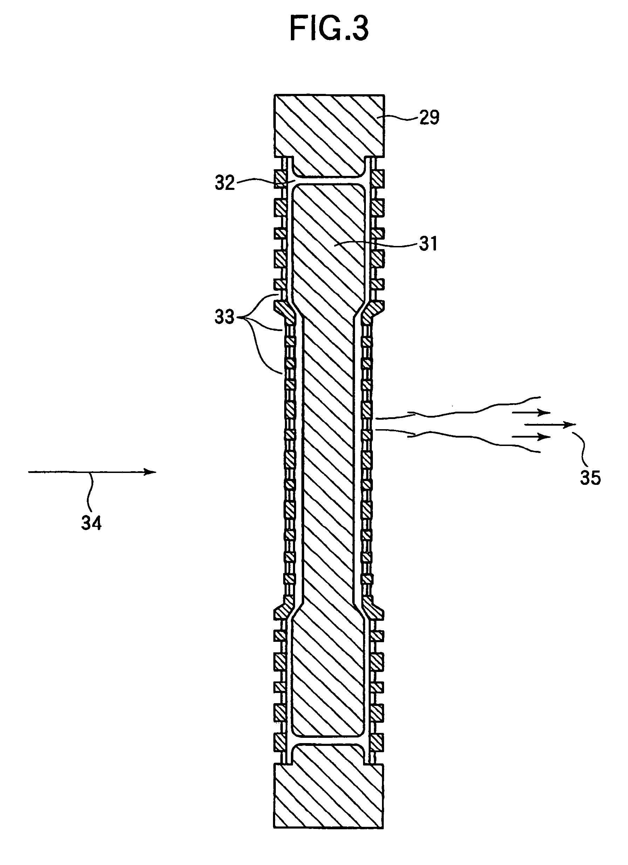

Fig. 3 is a sectional top view of a collector shoe 29 having a component according to a second embodiment of the present invention.

In the second embodiment, a bypass channel 32 is provided to surround a component 31 such as a slider, and is connected to vent holes 33 provided in the front and rear sides of the collector shoe 29.

The bypass channel 32 is shaped like a closed loop that makes the circuit of the component 31. Alternatively, the bypass channel 32 may have breaks at some points.

In the second embodiment, a jet flow 35 is produced in the direction of a main airflow 34, and eolian sounds are reduced in a manner similar to the principle of the first embodiment described with reference to Figs. 1 and 2.

Moreover, since the channel resistance between the front and rear vent holes 33 varies depending on the positions of the vent holes 33 in this structure having the bypass channel 32, the strength of the jet flow 35 varies in the longitudinal direction, and the jet flow is automatically made nonuniform. As a result, the structure of the Karman vortexes in the longitudinal direction can be broken more strongly.

In addition, when the bypass channel 32 is provided separately, the component can be isolated from, for example, dust, and the maintenance of the current collector apparatus can be facilitated.

Since the appearance of the collector shoe 29 is similar to that in the first embodiment, disturbance is caused and the longitudinal vortex 11 are produced, and a turbulent flow is produced at the boundaries, and the combination effect of the longitudinal vortex 11 is caused. This prevents the main airflow 34 from being separated in the collector shoe 29.

The structure of the collector shoe 29 shown in Fig. 3 is also applicable to the shoe support member 2 shown in Fig. 1. For example, in order to bypass a component such as a conductor cable, the support member 2 is formed of a double cylinder in which the cable extends through an inner cylinder section and a space between the inner cylinder section and an outer cylinder section is used as an air channel.

### <Third Embodiment>

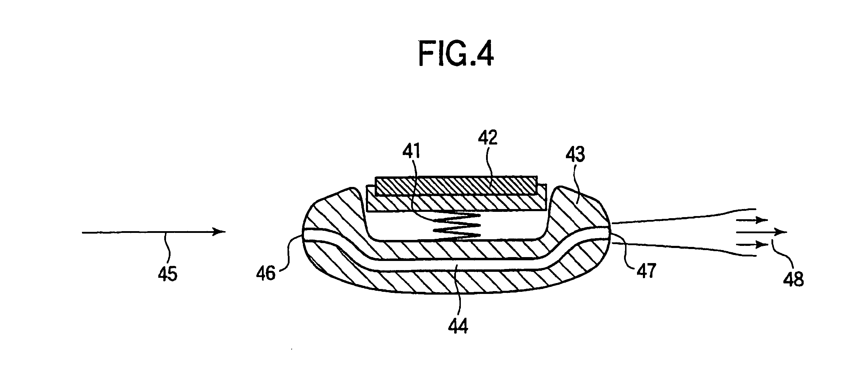

Fig. 4 is a cross-sectional view of a collector shoe 43 according to a third embodiment of the present invention, taken perpendicularly to the longitudinal direction.

While the component 31 is bypassed in the right-to-left direction in the second embodiment shown in Fig. 3, a component is bypassed on the lower side in the third embodiment.

The collector shoe 43 incorporates a slider 42 supported by an elastic member 41, and a bypass channel 44 extending in the lower part so as not to touch these components.

Part of a main airflow 45 is introduced into the bypass channel 44 from a front vent hole 46, and is ejected as a jet flow 48 from a rear vent hole 47.

In the third embodiment, the thickness of the collector shoe 43 is increased correspondingly to the width of the bypass channel 44. However, since the channel length can be shorter and the channel resistance can be lower than in the second embodiment shown in Fig. 3, the amount of the jet flow 48 can be increased without changing the differential pressure. Therefore, the effect of reducing eolian sounds can be enhanced.

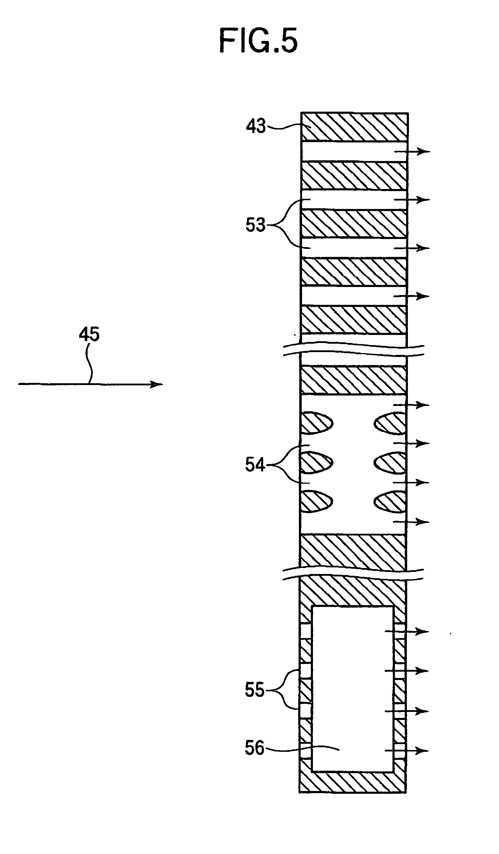

Fig. 5 is a sectional plan view showing air channels provided in the collector shoe 43 shown in Fig. 4. In Fig. 5, three types of air channels are shown. All the air channels extend below the component.

A main airflow 52 passes toward the collector shoe 43, as shown by the arrow in Fig. 5. Air channels 53 link front vent holes and rear vent holes in one-to-one correspondence. The cross-sectional shape of the air channels 53 is not limited.

Adjacent air channels 54 are combined halfway to share a space. While the air channels 54 are combined at the same position in Fig. 5, they may be combined at different positions. This combination reduces the weight of the collector shoe 43, and prevents the resonance inside the air channels 54.

Air channels 55 are extreme modifications of the air channels 54. That is, the air channels 55 share a single space 56, and vent holes are provided on the front and rear sides of the space 56.

In this case, the resonance and resistance inside the air channels 55 can be decreased, and the strength of the jet flow is increased.

### <Fourth Embodiment>

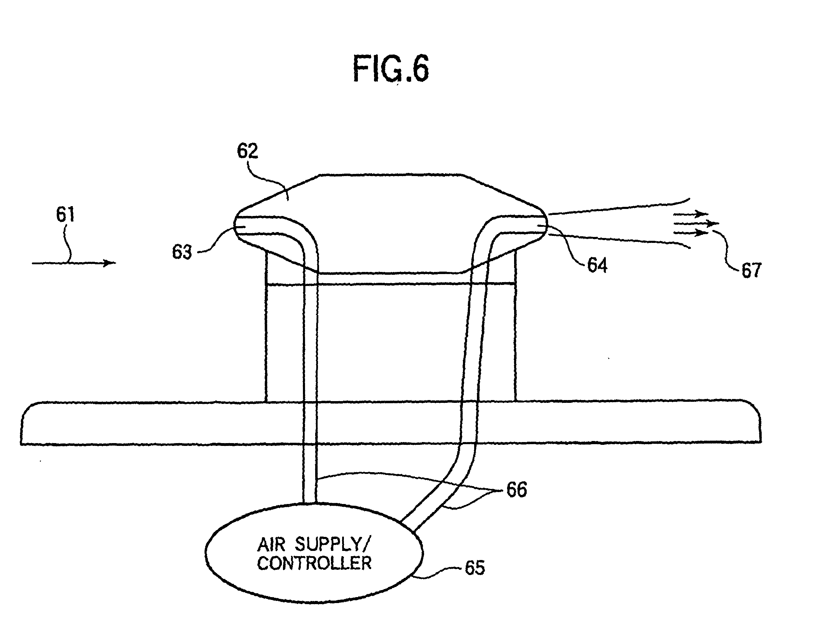

Fig. 6 is a cross-sectional view of a current collector apparatus according to a fourth embodiment of the present invention, taken perpendicularly to the longitudinal direction of a collector shoe.

A collector shoe 62 has a front vent hole 63 and a rear vent hole 64 for a main airflow 61, in a manner similar to that in the above embodiments.

In the fourth embodiment, the front and rear vent holes 63 and 64 are not directly connected, but are connected, by transmission pipes 66, to an air supply 65 provided outside the collector shoe 62. Air supplied from the air supply 65 is ejected as a jet flow 67.

The air supply 65 is, for example, a mechanical element such as an air compressor, or an air intake similar to the front vent hole 63 of the collector shoe 62, which is provided outside the collector shoe 62 in a part of the vehicle.

The fourth embodiment is highly effective in reducing eolian sounds because the jet flow rate can be controlled independently of the size of the collector shoe 62. When the air supply 65 can control the jet flow rate, it is possible to actively control noise reduction in accordance with the moving speed of the vehicle and the surrounding environment.

## Claims

1. A current collector apparatus installed on a roof of a vehicle, and including a collector shoe (1),
wherein the collector shoe (1) includes one or more front vent holes (6) and one or more rear vent holes (7) provided, respectively, in front and rear surfaces with respect to the running direction of the vehicle, and one of the front vent holes (6) is connected to at least one of the rear vent holes (7) by an air channel (8).

2. A current collector apparatus according to claim 1, wherein the collector shoe (43) comprises:
a component which is not air-permeable or doesn't prefer air-permeable (41,42), placed inside the collector shoe (43); and a bypass air channel (44) provided around the component,
wherein one of the front vent holes (46) is connected to at least one of the rear vent holes (47) by the bypass air channel (44).

3. A current collector apparatus installed on a roof of a vehicle, the current collector apparatus comprising:
a collector shoe (62) having a vent hole (64) provided in a downstream-side surface with respect to the running direction of the vehicle; and
an air supply (65) provided outside the collector shoe (62),
wherein the vent hole (64) and the air supply (65) are connected by an air channel (66).
